# EUROPEAN PATENT APPLICATION

(11) **EP 4 507 176 A1**
(43) Date of publication of application: **12.02.2025**
(21) Application number: 23020370.5
(22) Date of filing: 07.08.2023
(51) Int. Cl.: H02M 1/00, H02M 1/38, H02M 3/00, H02M 3/335

(54) **CONTROLLER AND CONTROL METHOD FOR BURST MODE IN LLC CONVERTERS**

(71) Applicant: Infineon Technologies Austria AG, 9500 Villach (AT)
(72) Inventor: Malinin, Andrey, 80524 Fort Collins (US)
(74) Representative: Infineon Patent Department

(57) **Abstract**

A controller is presented. The controller may be configured to control operation of an inductor-inductor-capacitor LLC converter comprising a bridge circuit with a first switching element and a second switching element. The controller may be configured to generate first pulses for turning on the first switching element and second pulses for turning on the second switching element. The controller may be configured to, in a burst operation mode, generate an initial first pulse, a full second pulse, and a final first pulse, wherein a duration of the initial first pulse is roughly half of a duration of the full second pulse, and wherein a duration of the final first pulse is roughly half of the duration of the full second pulse.

## Description

### Technical field

The present document relates a controller and control method for controlling a burst mode in an LLC converter. In particular, the present document relates to switching patterns for switching from continuous mode to burst mode and vice versa.

### Background

Resonant power converters are popular due to their inherent soft-switching capability, high efficiency, low electromagnetic interference (EMI), and high power density. Among resonant power converters, the LLC converter is the most popular architecture. However, LLC converters operating at light load have the tendency to uncontrollable output voltage increase. The approach proposed within this document may help solving this problem by implementing a burst mode generating switching pattern for a short period of time, and then turning the converter off to prevent output voltage from increasing. Because, with the proposed approach, on/off transitions happen without transient components stress, output ripple and switching frequency range may be minimized. This may allow optimizing converter operation at light load.

### Summary

According to an aspect, a controller is presented. The controller may be configured to control operation of an inductor-inductor-capacitor LLC converter comprising a bridge circuit with a first switching element and a second switching element. The controller may be configured to generate first pulses for turning on the first switching element and second pulses for turning on the second switching element. The controller may be configured to, in a burst operation mode, generate an initial first pulse, a full second pulse, and a final first pulse, wherein a duration of the initial first pulse is roughly half of a duration of the full second pulse, and wherein a duration of the final first pulse is roughly half of the duration of the full second pulse.

The controller may be any kind of microcontroller or control circuit for controlling a power converter. The controller may have telemetry functionality i.e. the controller may be configured to receive and process signals representing currents, voltages, or temperatures from the LLC converter. For this purpose, the controller may e.g. comprise one or more analog digital converters ADCs. The controller may then be capable of generating control signals such as e.g. control pulses for controlling operation of the LLC converter. At this, the generation of control signals may or may not be based on the signals received from the LLC converter.

The above-described pulses may be e.g. voltage signals. For example, a pulse may have a raising edge, a high voltage value during the duration of the pulse, and a falling edge. Alternatively, a pulse may also be an inverted pulse with a falling edge, a low voltage value during the duration of the pulse, and a raising edge. In any case, during the duration of the pulse, the respective switching element may be turned on. The respective switching element may be turned off before and after the pulse.

The bridge circuit may be a half-bridge circuit comprising only the first switching element and the second switching element. Alternatively, the bridge circuit may be a full-bridge comprising, in addition to the first switching element and the second switching element, a third switching element and a fourth switching element.

Within this document, the word "roughly" is meant to include minor variations of the durations of the pulses. For example, when dead times between individual pulses are taken into account, the durations of some of the pulses mentioned within this document may vary e.g. by the duration of said dead times.

Furthermore, within this document, all pulses denoted as "first" pulses are supposed to turn on the first switching element, and all pulses denoted as "second" pulses are supposed to turn on the second switching element.

The controller may be configured to generate the full second pulse after the initial first pulse, and to generate the final first pulse after the full second pulse. In other words, the controller may be configured to generate a burst of pulses in the following chronological order: initial first pulse - full second pulse - final first pulse.

The controller may be configured to generate a further full first pulse and a further full second pulse between the full second pulse and the final first pulse. That is, the controller may be configured to generate the burst of pulses in the following chronological order: initial first pulse - full second pulse - further full first pulse - further full second pulse - final first pulse. As indicated by the word "full" in their names, both the duration of the further full first pulse and the duration of the further full second pulse may be equal to the duration of the full second pulse.

The controller may be configured to generate an integer number k of pairs of first and second full pulses between the full second pulse and the final first pulse, and the controller may be configured to randomly select the integer number k. Again, as indicated by the word "full" in their names, the duration of the added first and second full pulses may be equal to the duration of the full second pulse.

The controller may be configured to, in the burst operation mode, during an off time preceding the initial first pulse, generate no first pulses and no second pulses.

The off time may be substantially longer than the duration of the full second pulse.

The controller may be configured to, in the burst operation mode, during an off time succeeding the final first pulse, generate no first pulses and no second pulses. Again, this off time may be substantially longer than the duration of the full second pulse.

The controller may be configured to, in a continuous operation mode, alternately generate full first pulses and full second pulses of equal duration. To be more specific, the controller may be configured to generate non-overlapping full first pulses and full second pulses for alternately turning on the first switching element and the second switching element. At this, the duration of the full first and second pulses in the continuous operation mode may be equal to the duration of the full second pulse generated by the controller in the burst operation mode. Moreover, the controller may be configured to insert dead times between the full first pulses and full second pulses in the continuous operation mode.

The controller may be configured to, at the end of the continuous operation mode, when switching to the burst operation mode, generate a last full second pulse and a subsequent first pulse, wherein a duration of the subsequent first pulse is roughly half of the duration of the last full second pulse.

The controller may be configured to, after generating the subsequent first pulse, in the burst operation mode, generate no first pulses and no second pulses.

The controller may be configured to, after a burst operation mode, when starting a continuous operation mode, generate a restart first pulse and a subsequent full second pulse, wherein a duration of the restart first pulse is roughly half of a duration of the subsequent full second pulse.

The controller may be configured to generate the restart first pulse after an off time of the burst operation mode during which the controller has not generated any first pulses or second pulses.

The controller may be configured to receive a signal indicative of a voltage at a switching node of the LLC converter, and the controller may be configured to start the restart first pulse when the signal has a local minimum. During the off time of the burst operation mode, the voltage at the switching node may be free ringing, and it may be beneficial to synchronize the restart first pulse with this free ringing in the above-described manner.

The duration of the final first pulse may be equal to the duration of the initial first pulse shortened by a dead time of the bridge circuit. At this, the dead time may be defined as the time interval between a first pulse and a second pulse. During the dead time, both the first and the second switched element are turned off.

According to another aspect, an LLC converter is presented. The LLC converter may be coupled to a controller as described in the foregoing description. The LLC converter may comprise a bridge circuit with the first switching element and the second switching element, a resonant tank circuit, a transformer, and a rectifier circuit.

The bridge circuit may be a half-bridge or a full-bridge circuit. In case of a half-bridge circuit, the bridge circuit may only comprise the first switching element and the second switching element. For example, the first switching element may be a low side switching element coupled between a switching node and a first supply voltage, and the second switching element may be a high side switching element coupled between the switching node and a second supply voltage. However, the role of the switching elements may also be swapped, i.e. the first switching element may also be the high side switching element, and the second switching element may be the low side switching element.

The switching elements may be implemented with any suitable devices, such as, for example, metal-oxide-semiconductor field effect transistors MOSFETs, insulated-gate bipolar transistors IGBTs, MOS-gated thyristors, or any other suitable power devices. For instance, the switching elements may be implemented using a III-V compound semiconductor material such as e.g. GaN- high-electron-mobility transistors HEMTs. Each switching element may have a gate to which a respective driving voltage/current or control signal may be applied to turn the switching element on (i.e. to close the switching element) or to turn the switching element off (i.e. to open the switching element).

The resonant tank circuit may comprise a resonance capacitor coupled between the bridge circuit (or more specifically the switching node) and the primary windings of the transformer. Specifically, the resonant tank circuit may also comprise a resonance inductor coupled in between the resonance capacitor and the primary windings of the transformer. Alternatively, the resonance inductor may be omitted, and the resonant tank circuit may solely rely on using a leakage inductance of the transformer as a resonance inductance. Moreover, the resonant tank circuit may also comprise a magnetizing inductor coupled in parallel to the primary windings of the transformer. That is, the magnetizing inductor may be coupled between a first terminal of the primary windings and a second terminal of the primary windings of the transformer.

In case of a full-bridge circuit, the bridge circuit may comprise, in addition to the first switching element and the second switching element, a third switching element and a fourth switching element. The third switching element may be coupled between the first supply voltage and the second terminal of the primary windings of the transformer. The fourth switching element may be coupled between the second terminal of the primary windings of the transformer and the second supply voltage.

The transformer may also comprise first secondary windings and second secondary windings. The rectifier circuit may comprise a first rectifier switch and a second rectifier switch. The rectifier switches may be implemented similar or equal to the first and the second switching element of the bridge circuit. Finally, the LLC converter may comprise an output capacitor.

According to yet another aspect, a method of controlling an inductor-inductor-capacitor LLC converter is presented. In general, the method may comprise steps which correspond to the functional features of the controller and the LLC converter described in the foregoing description. Specifically, the method may comprise generating first pulses for turning on the first switching element and generating second pulses for turning on the second switching element. The method may comprise generating, in a burst operation mode, an initial first pulse, a full second pulse, and a final first pulse, wherein a duration of the initial first pulse is roughly half of a duration of the full second pulse, and wherein a duration of the final first pulse is roughly half of the duration of the full second pulse.

The method may comprise generating the full second pulse after the initial first pulse, and generating the final first pulse after the full second pulse. The method may comprise generating a further full first pulse and a further full second pulse between the full second pulse and the final first pulse. The method may comprise generating an integer number k of pairs of first and second full pulses between the full second pulse and the final first pulse, and randomly selecting the integer number k. The method may comprise generating, in the burst operation mode, during an off time preceding the initial first pulse, no first pulses and no second pulses. The method may comprise generating, in the burst operation mode, during an off time succeeding the final first pulse, no first pulses and no second pulses. The method may comprise alternately generating, in a continuous operation mode, full first pulses and full second pulses of equal duration. The method may comprise generating, at the end of the continuous operation mode, when switching to the burst operation mode, a last full second pulse and a subsequent first pulse, wherein a duration of the subsequent first pulse is roughly half of the duration of the last full second pulse. The method may comprise generating, after generating the subsequent first pulse, in the burst operation mode, no first pulses and no second pulses. The method may comprise generating, after a burst operation mode, when starting a continuous operation mode, a restart first pulse and a subsequent full second pulse, wherein a duration of the restart first pulse is roughly half of a duration of the subsequent full second pulse. The method may comprise generating the restart first pulse after an off time of the burst operation mode during which the controller has not generated any first pulses or second pulses. The method may comprise receiving a signal indicative of a voltage at a switching node of the LLC converter, and starting the restart first pulse when the signal has a local minimum. The duration of the final first pulse may be equal to the duration of the initial first pulse shortened by a dead time of the bridge circuit.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or indirectly connected via other circuit elements between them. For example, two elements may be said to be coupled even if there is a circuit element such as a switch (which may be turned on and off) in between them. On the other hand, the term "connect" or "connected" refers to elements being directly electrically connected with each other, e.g. via wires, and no circuit elements are located between them.

### Short description of the figures

The present invention is illustrated by way of example, and not by way of limitation, in the figures in which like reference numerals refer to similar or identical elements, and in which
Fig. 1 shows an exemplary LLC power converter,
Fig. 2 shows exemplary burst switching patterns according to the invention,
Fig. 3 shows exemplary waveforms of the LLC converter when entering burst mode without switching patterns proposed by the present invention,
Fig. 4 shows exemplary waveforms of the LLC converter when exiting burst mode without switching patterns proposed by the present invention,
Fig. 5 shows exemplary waveforms of the LLC converter when entering burst mode with switching patterns proposed by the present invention,
Fig. 6 shows exemplary waveforms of the LLC converter when exiting burst mode with switching patterns proposed by the present invention,
Fig. 7 shows a transition from the off time of a burst operation mode to the continuous operation mode, and
Fig. 8 shows an exemplary adaptation of the duration of a pulse duration based on dead times.

### Detailed description

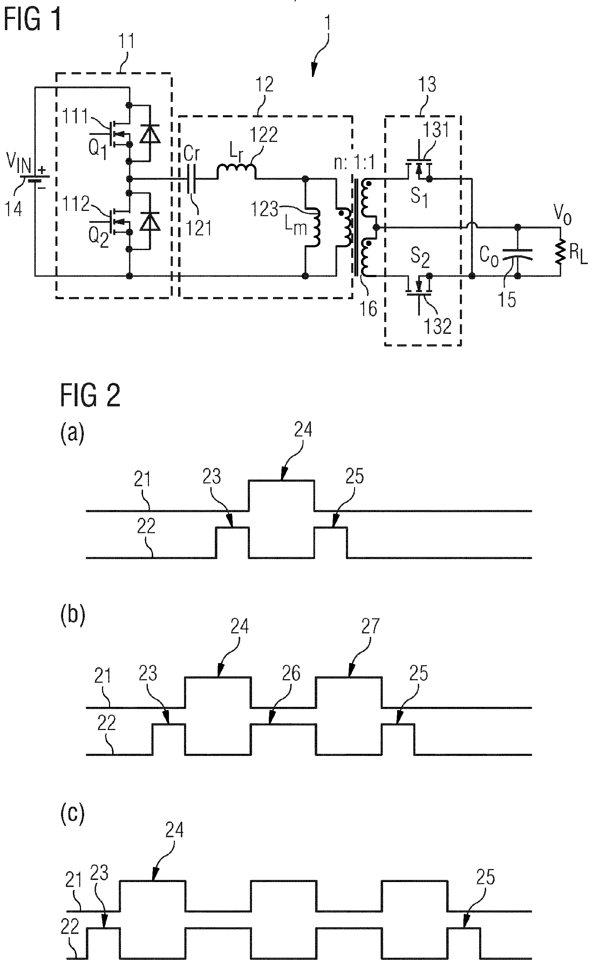

Fig. 1 shows an exemplary LLC power converter 1. The LLC converter 1 comprises a bridge circuit 11 with a first switching element 112 and a second switching element 111, a resonant tank circuit 12, a transformer 16, and a rectifier circuit 13. In this example, the first switching element 112 is a low side switching element coupled between a switching node and a first supply voltage of the voltage source 14, and the second switching element is a high side switching element coupled between the switching node and a second supply voltage of the voltage source 14. The resonant tank circuit 12 comprises a resonance capacitor 121 coupled between the bridge circuit (or more specifically the switching node) and the primary windings of the transformer 16. Specifically, the resonant tank circuit also comprises a resonance inductor 122 coupled in between the resonance capacitor 121 and the primary windings of the transformer 16. Alternatively, the resonance inductor 122 may be omitted, and the resonant tank circuit may solely rely on using a leakage inductance of the transformer 16 as a resonance inductance. Moreover, the resonant tank circuit 12 also comprises a magnetizing inductor 123 coupled in parallel to the primary windings of the transformer 16. That is, the magnetizing inductor is coupled between a first terminal of the primary windings and a second terminal of the primary windings of the transformer 16. The transformer 16 also has first secondary windings, second secondary windings, and a winding ratio n. The rectifier circuit 13 comprises a first rectifier switch 131 and a second rectifier switch 132. Finally, the LLC converter comprises an output capacitor 15.

The LLC converter 1 has the very nice feature when operating at or near optimal point that primary side switches commutate at zero voltage with the small current, and the secondary side switches have zero voltage/zero current turn on and zero current turn off. However, these switching conditions can be achieved only when the ratio Vin/nVout is close to 1. Also, no load/light load regulation for nVout/Vin < Lm/(Lm+Ls) is impossible regardless of the switching frequency. This property limits the possibility to use the LLC converter 1 in the applications which require compensation of input overshoots and/or input voltage sags. One of such applications is the telecom intermediate bus converters (IBC). While the 48V bus is nicely regulated during normal operation, it can go up to 72V during battery charging and down to 36V during the AC/DC holdup while reserve generator is not started. A burst mode of operation (as proposed in the present document) could be very helpful to regulate the output in case of the high input voltage. In particular, it is an objective of the present invention to provide a switching pattern which enables entering and exiting the burst mode happens with reduced transients and reduced stress on the components.

Fig. 2 shows exemplary burst switching patterns according to the invention. In Fig. 2(a) and Fig. 2(b) and Fig. 2(c), without loss of generality, the gate of the high side switching element may be driven by gate signal 21, the gate of the low side switching element may be driven by gate signal 22. In Fig. 2(a), the controller generates an initial first pulse 23, a full second pulse 24, and a final first pulse 25, wherein a duration of the initial first pulse 23 is roughly half of a duration of the full second pulse 24, and wherein a duration of the final first pulse 25 is roughly half of the duration of the full second pulse 24. Fig. 2(b) shows a longer burst pulse sequence with 2 added full pulses. Here, the controller generates a further full first pulse 26 and a further full second pulse 27 between the full second pulse 24 and the final first pulse 25. In Fig. 2(b), another pair of full pulses is added to generate a longer burst pulse sequence.

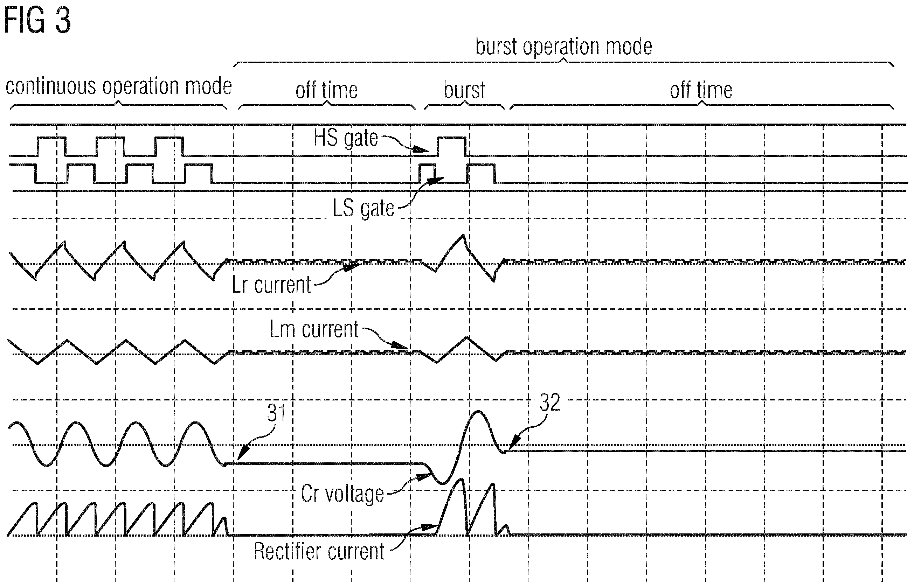

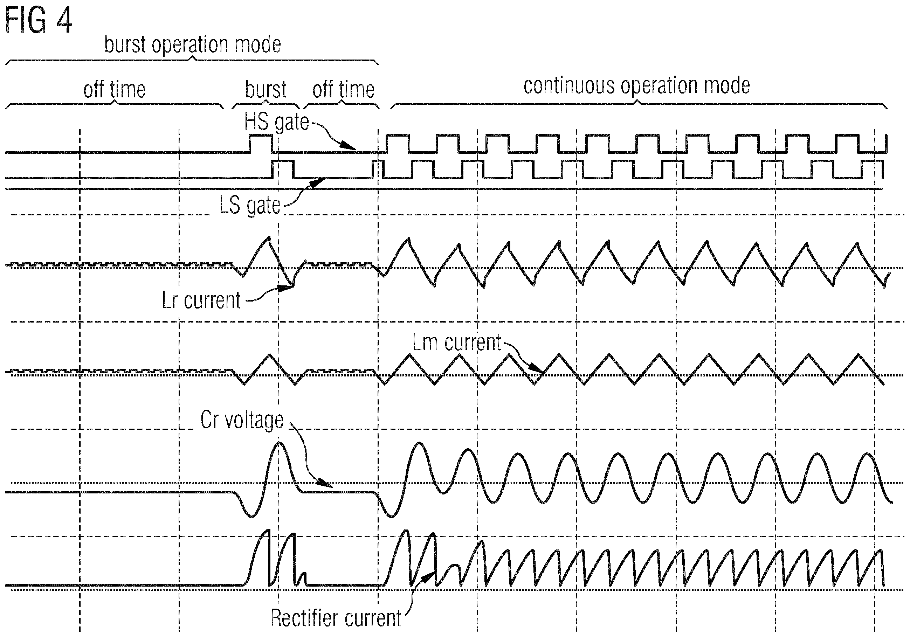

Fig. 3 shows exemplary waveforms of the LLC converter when entering burst mode without switching patterns proposed by the present invention. The analysis of voltage and current waveforms shows that during this kind of burst, the resonance capacitor voltage is different after the last normal operation pulse (see 31) and the burst (see 32). Also, average voltage on the capacitor is different during the burst and normal operation. Fig. 4 shows exemplary waveforms of the LLC converter when exiting burst mode without switching patterns proposed by the present invention. The exit from the burst mode happens with transients.

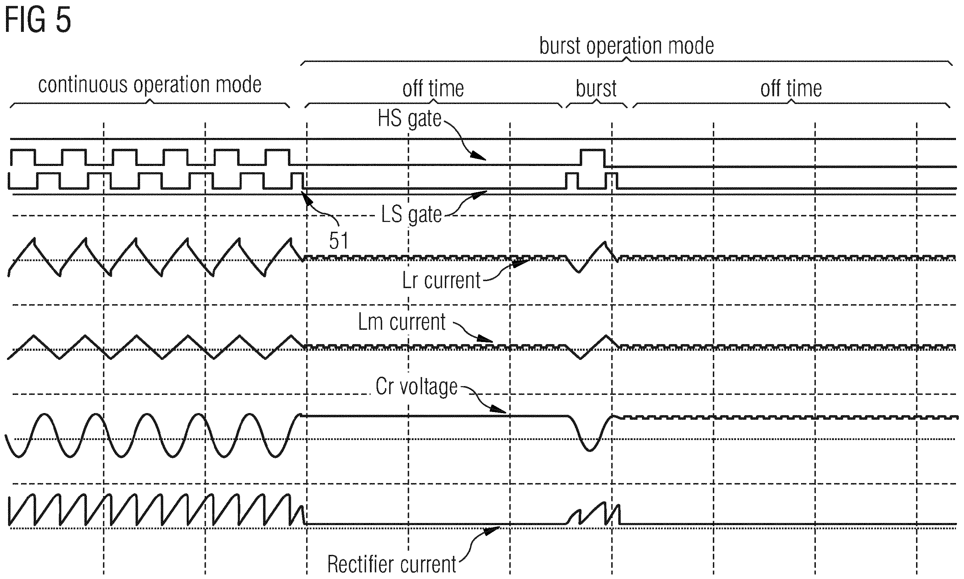

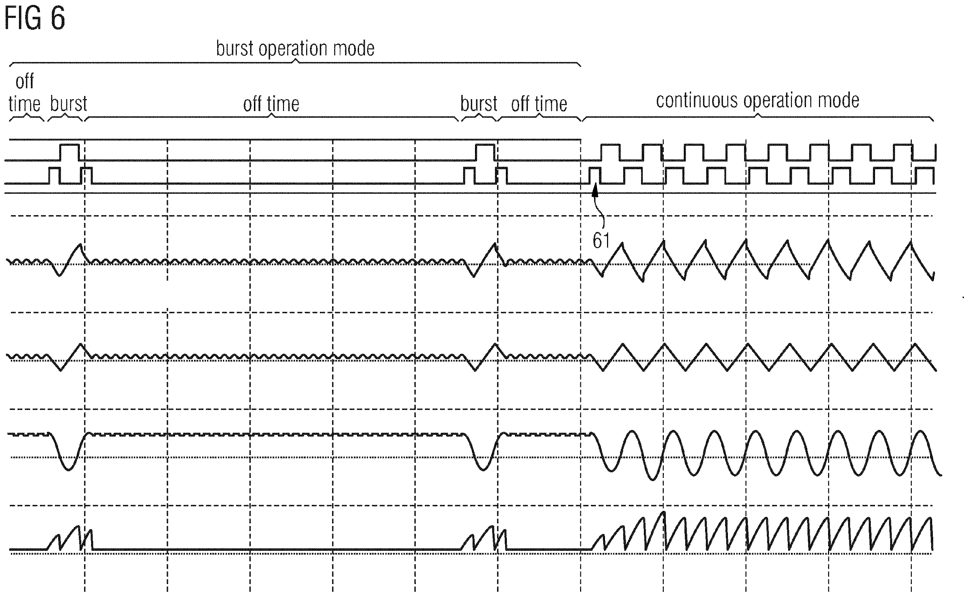

Fig. 5 shows exemplary waveforms of the LLC converter when entering burst mode with switching patterns proposed by the present invention. An exemplary burst pattern consists of the minimum 3 pulses - half time for one switching side, full time for the other switching side and one more half for the first switching side. As can be seen in Fig. 5, the last switching pulse 51 of the continuous operation is on the first switching side and has the half time duration. Voltage on the resonance capacitor is the same before and after the burst, and also the average voltage at the switching node is the same during the burst mode and continuous operation. Fig. 6 shows exemplary waveforms of the LLC converter when exiting burst mode with switching patterns proposed by the present invention. Here, transition to the continuous operation starts with a half pulse 61 of the first switching side. This may enable transition with the transient without current overshoot and quick settling to the steady state.

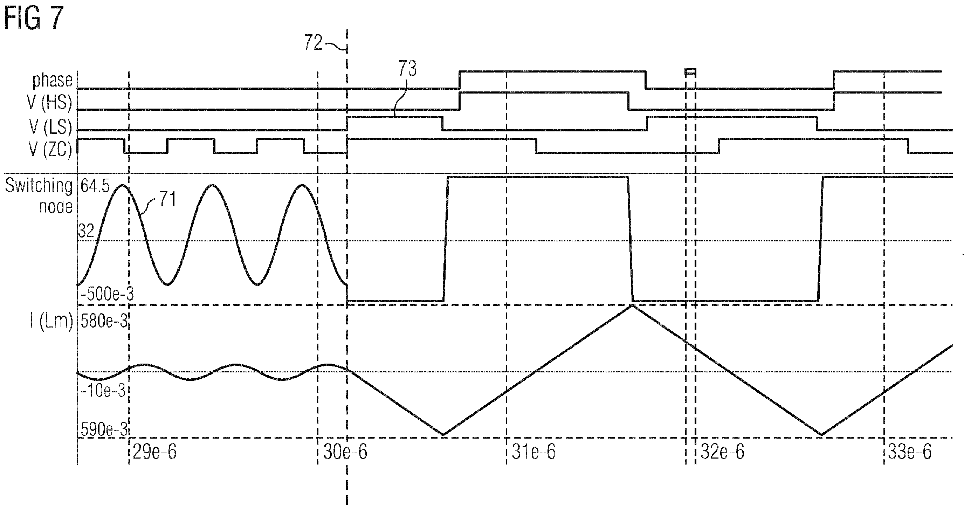

Fig. 7 shows an exemplary transition from the off time of a burst operation mode to the continuous operation mode. In this example, the first pulse of the burst sequence is started when the voltage 71 at the switching node is low at time 72 (e.g. at a local minimum). The controller may sense voltage 71 and synchronize start of the restart first pulse 73 accordingly.

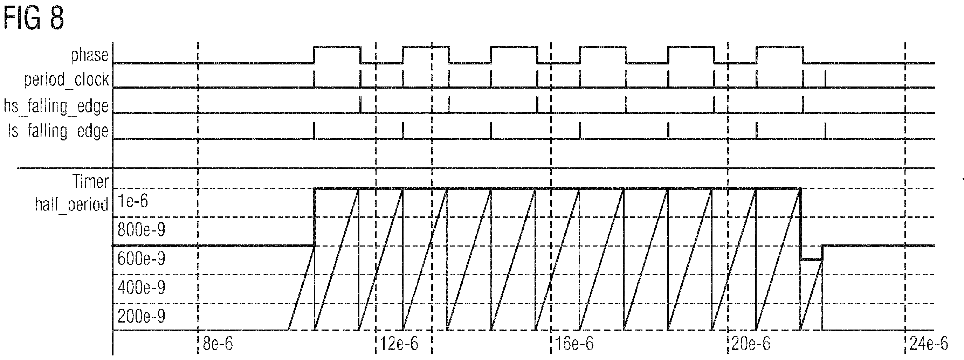

Fig. 8 shows an exemplary adaptation of the duration of a pulse duration based on dead times. In particular, it may be critical for the proper operation that the first and last pulse of the burst have a proper duration. Due to the zero voltage switching, phase node transition may be aligned with the falling edge of the control signal. To ensure that the switching node stays at the first switching side voltage for the proper time, the dead time should be taken into account. Thus, for instance, the first switching pulse should have the half period length, and the last switching pulse should be shortened by the dead time.

Some of the benefits of the present invention may be summarized as follows: The switching between the burst and continuous operation is seamless. As a result, closed loop control doesn't require any transient management or components stress reduction measures. Burst in/out conditions don't depend on number of pulses during the burst. By random selection of the number of pulses of the burst, frequency could be randomized to mitigate audible noise issues. The pattern may always start from the same (low side) switching side. This allows to charge the bootstrap capacitor for the high side driver before the high side control pulse is issued. This may result in consistent operation even with long off times in burst operation mode.

In conclusion, a switching pattern preventing LLC resonance circuit transient during on/off transition is proposed. With the proposed switching pattern, the LLC converter can be turned off for an arbitrary short or long time (off times) and turned on again consistently. This allows effective implementation of the burst mode operation at light load.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A controller for controlling operation of an inductor-inductor-capacitor LLC converter comprising a bridge circuit with a first switching element and a second switching element, wherein the controller is configured to generate first pulses for turning on the first switching element and second pulses for turning on the second switching element, wherein the controller is configured to, in a burst operation mode, generate an initial first pulse, a full second pulse, and a final first pulse, wherein a duration of the initial first pulse is roughly half of a duration of the full second pulse, and wherein a duration of the final first pulse is roughly half of the duration of the full second pulse.

2. The controller according to claim 1, wherein the controller is configured to generate the full second pulse after the initial first pulse, and to generate the final first pulse after the full second pulse.

3. The controller according to claim 2, wherein the controller is configured to generate a further full first pulse and a further full second pulse between the full second pulse and the final first pulse.

4. The controller according to claim 2, wherein the controller is configured to generate an integer number k of pairs of first and second full pulses between the full second pulse and the final first pulse, and wherein the controller is configured to randomly select the integer number k.

5. The controller according to any one of the preceding claims, wherein the controller is configured to, in the burst operation mode, during an off time preceding the initial first pulse, generate no first pulses and no second pulses.

6. The controller according to any one of the preceding claims, wherein the controller is configured to, in the burst operation mode, during an off time succeeding the final first pulse, generate no first pulses and no second pulses.

7. The controller according to any one of the preceding claims, wherein the controller is configured to, in a continuous operation mode, alternately generate full first pulses and full second pulses of equal duration.

8. The controller according to any one of the preceding claims, wherein the controller is configured to, at the end of the continuous operation mode, when switching to the burst operation mode, generate a last full second pulse and a subsequent first pulse, wherein a duration of the subsequent first pulse is roughly half of the duration of the last full second pulse.

9. The controller according to claim 8, wherein the controller is configured to, after generating the subsequent first pulse, in the burst operation mode, generate no first pulses and no second pulses.

10. The controller according to any one of the preceding claims, wherein the controller is configured to, after a burst operation mode, when starting a continuous operation mode, generate a restart first pulse and a subsequent full second pulse, wherein a duration of the restart first pulse is roughly half of a duration of the subsequent full second pulse.

11. The controller according to claim 10, wherein the controller is configured to generate the restart first pulse after an off time of the burst operation mode during which the controller has not generated any first pulses or second pulses.

12. The controller according to claim 10 or 11, wherein the controller is configured to receive a signal indicative of a voltage at a switching node of the LLC converter, and wherein the controller is configured to start the restart first pulse when the signal has a local minimum.

13. The controller according to any one of the preceding claims, wherein the duration of the final first pulse is equal to the duration of the initial first pulse shortened by a dead time of the bridge circuit.

14. An inductor-inductor-capacitor LLC converter coupled to a controller according to any one of the preceding claims, the LLC converter comprising a bridge circuit with the first switching element and the second switching element, a resonant tank circuit, a transformer, and a rectifier circuit.

15. A method of controlling an inductor-inductor-capacitor LLC converter comprising a bridge circuit with a first switching element and a second switching element, the method comprising
- generating first pulses for turning on the first switching element and generating second pulses for turning on the second switching element, and
- generating, in a burst operation mode, an initial first pulse, a full second pulse, and a final first pulse, wherein a duration of the initial first pulse is roughly half of a duration of the full second pulse, and wherein a duration of the final first pulse is roughly half of the duration of the full second pulse.
